# EUROPEAN PATENT APPLICATION

(11) **EP 1 179 810 A1**
(43) Date of publication of application: **13.02.2002**
(21) Application number: 00117474.7
(22) Date of filing: 11.08.2000
(51) Int. Cl.: G07D 7/00

(54) **Security documents data exchange system**

(71) Applicant: European Central Bank, Directorate Banknotes, RDDO, 60311 Frankfurt am Main (DE)
(72) Inventor: Arrieta, Antonio, European Central Bank, 60311 Frankfurt am Main (DE)

(57) **Abstract**

A information exchange system between a security document and a sensor based in a microprocessor included in the document allows this exchange in one or both directions: from the security document to sensor or vice-versa. The system can be combined with other usual security features to include in security documents as banknotes, checks, identity cards, passports, such as intaglio printing, offset printing, silkscreen printing, heliogravure printing, letterpress printing or hot stamping applying.

## Description

### FIELD OF THE INVENTION.

Security documents such as Banknotes, Passports, Checks, Identity cards, etc need to increase their level of security and runnability in the increasing day to day authomatized cash and security documents handling process.

### BACKGROUND OF THE INVENTION.

One of the proposes of different security elements and devices included in the above mentioned security documents is to bear information that allows both users and machines to discriminate between real and forged documents and to discriminate among different real security documents. These security elements such as watermarks, intaglio printing, offset printing, letterpress printing, holographic elements, security threads, security fibres, etc. have a limited capacity for information for the general public and for processing machines.

The last generation of electronic devices it makes possible to store large amount of information in a secure way in order to avoid unappropiate manipulation of information.

### SUMMARY OF THE INVENTION.

The invention is based on the use of a specific electronic device that are able to store information regarding the identity of the security document, the issuing person or authority, serial number, and any other informatin that the user considers interesting to include, previous to issuing the document or during its life span.

For this information exchange a complete system is used to allow the writing of this information in the electronic device in such a way that only specific tools have access to it.

All information exchange between security document electronic device and sensors as well as stored information in electronic device is protected against general public access.

If it were of interesting to avoid easily recognition by the public of this security feature, this electronic device could be combined with intaglio printing, offset printing, letterpress printing, silkscreen printing, heliogravure printing, or holographic devices.

The complete invention includes the system to make operative the electronic device included in the security document.

As information can be read or written on the electronic device's memory, depending on this specific information, a detector can check the security document that includes this electronic device as a genuine one. This authentication can easily be done just including general information of the document in the electronic device's memory.

Also, specific information of each single document can be stored in the electronic device's memory, such as serial number, issuing authority, data of issuing, etc. This information can be read by an specific device in order to store the individual information that this security document has been written during its life.

With this system, each individual security document can store its specific data in a non-general public accessible way, for reading as well as for writing.

The information to store in the security document electronic device can come from an operator, through specific communication systems as well as from automatic data readers from the same security document or from other information source.

## Claims

1. A complete security system based on the information and storage capability of an electronic device (A) applied in a security document (B) such as a banknote, passport, identity card, check, etc. that allows recognition and detection of each single document as well as written individual information.

2. The electronic device (A) and/or its combination with intaglio printing, offset printing, silkscreen printing, heliogravure printing, letterpress printing or holographic devices for bearing information on security document such as banknotes, passports, identity cards, checks, etc.

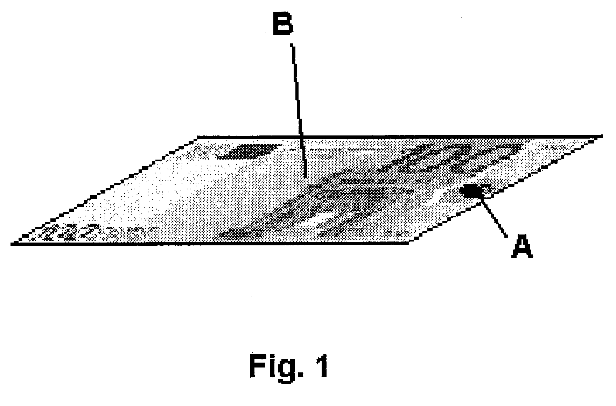

3. Any security document, (B) such as a banknote, passport, identity card, check, etc that includes the electronic device or claim 2. See Fig. 1.

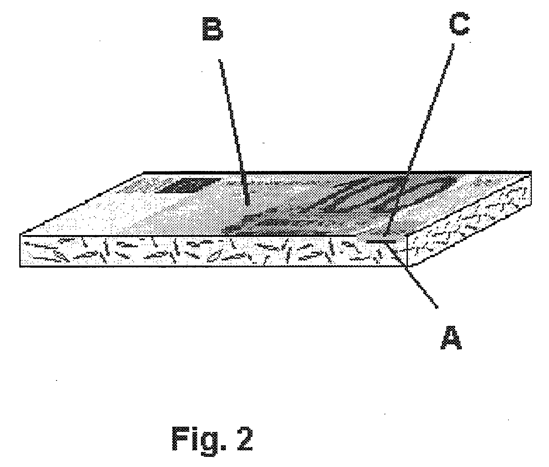

4. The combination of an electronic device (A) and a holographic device (C) for information bearing and public authenticity checking in security documents. See Fig. 2.

5. Any security document, (B) such as a banknote, passport, identity card, check, etc that includes the electronic device or claim 4 . See Fig. 1.

6. The process of combining an electronic device with intaglio printing, offset printing, silkscreen printing, heliogravure printing, letterpress printing or holographic devices for bearing information in a security document as banknotes, passports, identity cards, checks, etc. for documents of claim 3 or claim 5 production.

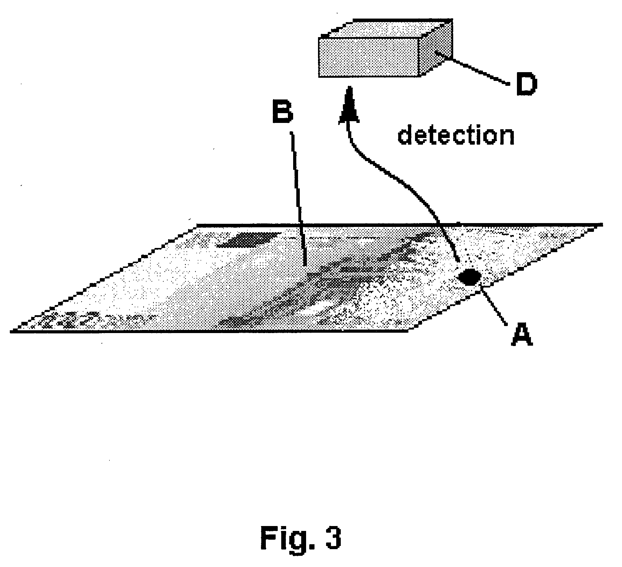

7. Any system (D) to detect the electronic device (A) of claim 2 and/or claim 4, or to exchange information with the electronic device (A) of claim 2 and/or claim 4, included in the security document (B), such as a banknote, passport, identity card, check, etc. including the information system for reading and writing in the security document electronic device's memory. See Fig. 3.

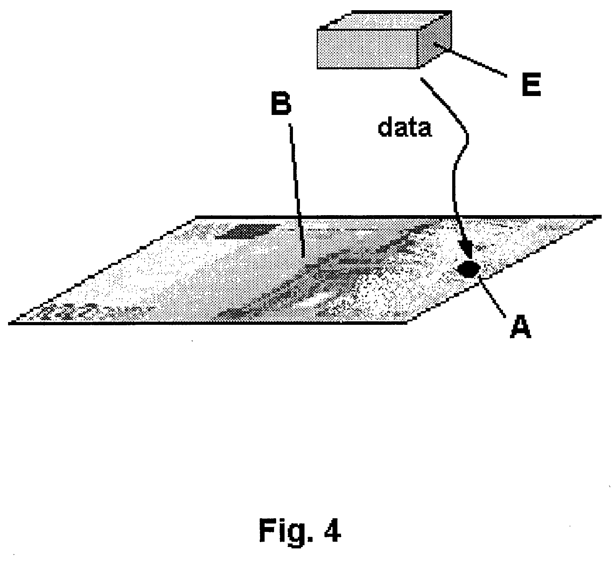

8. Any system (E) as indicated in claim 7 used to process, transmit and write any kind of information in the security document electronic device's memory of claim 2 and/or claim 4, as security document's serial number, dates, and any other information. See Fig. 4.

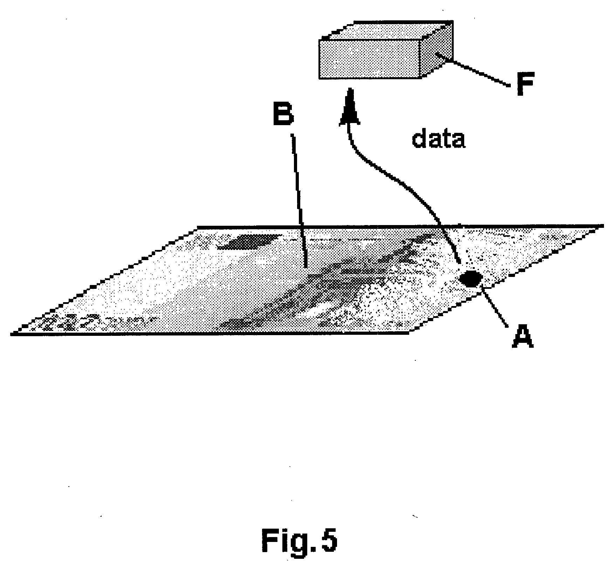

9. Any system (F) as indicated in claim 7 used to receive, read and process any kind of information from the electronic device (A) of claim 2 and/or claim 4 and to make any kind of combinations with this and/or other information. See Fig. 5.

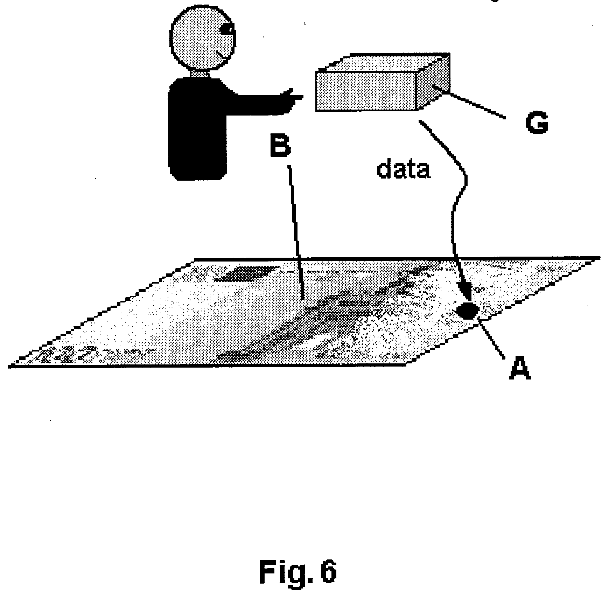

10. Any system (G) as indicated in claim 7 used by operators to process, transmit and write any kind of information in the security document electronic device (A) of claim 2 and/or claim 4 memory. See Fig. 6.

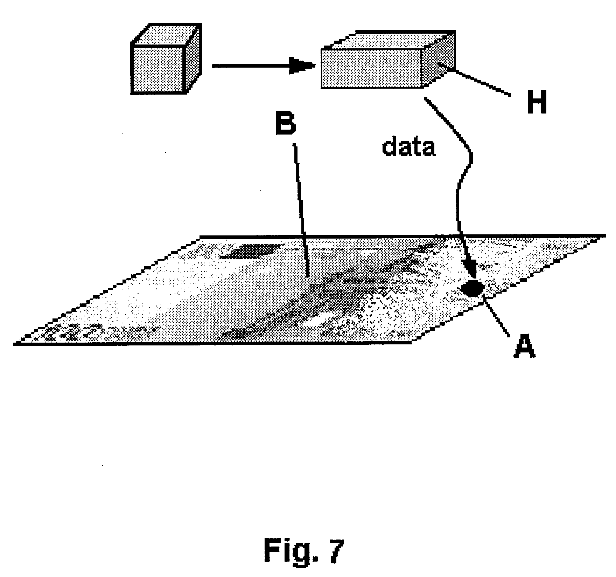

11. Any system (H) as indicated in claim 7 used by any other automatic device for process, transmit and write any kind of information in the security document electronic device (A) of claim 2 and/or claim 4 memory. See Fig. 7.

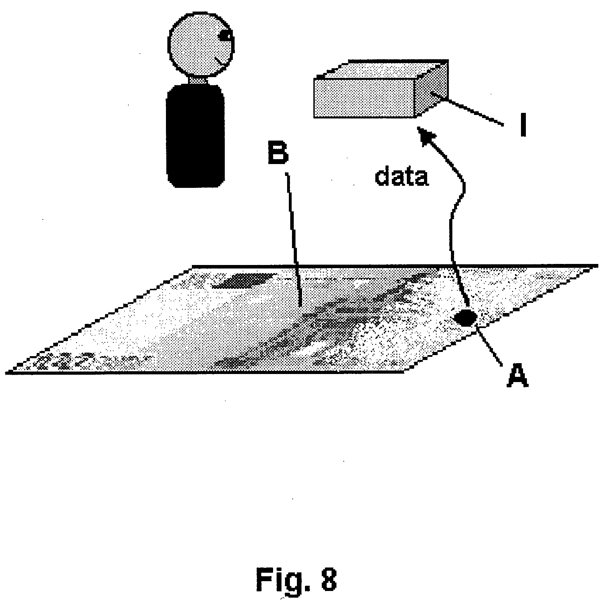

12. Any system (I) as indicated in claim 7 used by operators to read, process, transmit and store any kind of information from the security document electronic device (A) of claim 2 and/or claim 4 memory. See Fig. 8.
